(19) Europäisches Patentamt
European Patent Office
Office européen des brevets

(11) **EP 2 180 614 B1**

(12) **EUROPEAN PATENT SPECIFICATION**

(45) Date of publication and mention
of the grant of the patent:
**27.02.2013 Bulletin 2013/09**

(21) Application number: **08800955.0**

(22) Date of filing: **23.09.2008**

(51) Int Cl.:
***H04B 10/2587*** *(2013.01)*   ***H04J 14/02*** *(2006.01)*

(86) International application number:
**PCT/CN2008/072466**

(87) International publication number:
**WO 2009/043272 (09.04.2009 Gazette 2009/15)**

(54) **OPTICAL LINE TERMINAL, PASSIVE OPTICAL NETWORK AND RADIO FREQUENCY SIGNAL TRANSMISSION METHOD**

OPTISCHER LEITUNGSABSCHLUSS, PASSIVES OPTISCHES NETZ UND VERFAHREN ZUR ÜBERTRAGUNG VON HOCHFREQUENZSIGNALEN

TERMINAL DE LIGNE OPTIQUE, RÉSEAU OPTIQUE PASSIF ET MÉTHODE DE TRANSMISSION D'UN SIGNAL RF

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.09.2007 CN 200710122523**

(43) Date of publication of application:
**28.04.2010 Bulletin 2010/17**

(73) Proprietor: **Huawei Technologies Co., Ltd.**
**Longgang District, Shenzhen**
**Guangdong 518129 (CN)**

(72) Inventors:
• **YU, Fan**
**Shenzhen**
**Guangdong 518129 (CN)**

• **ZHAO, Jun**
**Shenzhen**
**Guangdong 518129 (CN)**

(74) Representative: **Thun, Clemens**
**Mitscherlich & Partner**
**Sonnenstraße 33**
**80331 München (DE)**

(56) References cited:
**EP-A1- 0 615 358       EP-A1- 1 635 489**
**CN-A- 1 481 105        CN-A- 1 983 906**
**GB-A- 2 245 116        US-A- 5 790 287**
**US-A1- 2006 029 393**

**Description**

**FIELD OF INVENTION**

The present disclosure relates to the technical field of network communications, and more particularly to an optical line terminal, a passive optical network and a radio frequency signal transmission method.

**BACKGROUND OF THE INVENTION**

A Passive Optical Network, PON, is a point-to-multipoint tree network structure. With such characteristics as simple network structure, sharing optical fiber resources, low cost and no need for installing active equipment externally, The PON is recognized as the most promising optical access technology. A prior art system is known from EP1635 489.

At present, in the network based on a PON, the Radio Frequency, RF, signal transmission method is as follows.

The same pair of optical carriers is used between a central office terminal and a plurality of base stations, BS, to transmit RF signals; that is, in a downstream direction, the central office terminal modulates RF signals of different frequencies which need to be transmitted to a plurality of BSs on a same downstream optical carrier through subcarrier multiplexing, the modulated optical signal is transmitted to a plurality of BSs via optical fiber, and the BSs convert the received optical signal to an electrical signal through a Photo Diode, PD. In other words, the optical signal is converted to a RF signal and the RF signal of said BS is obtained by filtering, and then the RF signal obtained through filtering is amplified and transmitted via an antenna; in an upstream direction, a plurality of RF signals of different frequencies which need to be transmitted to the central office terminal by the BSs are modulated on the upstream optical carrier of the same wavelength, and the upstream optical carriers of a plurality of BSs are combined at a Remote Node, RN, and then transmitted to the central office terminal via an optical fiber.

Because a signal after being photoelectrically converted is a RF signal, which may be transmitted directly by a base station, the base station does not need to perform modulation and frequency mixing on the received signal again. Therefore, the base station in the network based on a PON is simplified in comparison with a conventional wireless transmission network.

Nevertheless, the above prior RF signal transmission has at least the following problems:

Optical fiber only serves as a carrier to transparently transmit RF signals in the above RF signal transmission process. Therefore, the large-capacity bandwidth resources of an optical fiber network are not fully used, thereby leading to low bandwidth of a wireless access network.

**SUMMARY OF THE INVENTION**

An embodiment of the present disclosure provides an optical line terminal, a passive optical network, and a radio frequency signal transmission method, in which the large-capacity bandwidth resources of the optical fiber network are fully used, the bandwidth of the wireless access network is enhanced and the design of an optical network unit, ONU, is simple.

An embodiment of the present disclosure provides an optical line terminal, including:

at least one transmitting unit, configured to provide an optical network unit, ONU, with one downstream optical carrier and two upstream optical carriers dedicated for the ONU, wherein the transmitting unit is configured to modulate the downstream radio frequency signal which needs to be transmitted to an ONU on the downstream optical carrier dedicated for the ONU, and after combining the modulated downstream optical carrier with the two upstream optical carriers dedicated for the ONU, output a downstream optical signal; the two upstream optical carriers dedicated for the ONU are configured to carry upstream radio frequency signals of the ONU; wherein the carrier frequencies of the two upstream optical carriers provided for the ONU by the transmitting unit are $f_{c1}$ and $f_{c3}$, which meet the condition $f_{c3}-f_{c1}=2\times f_{RF\_u}$, wherein $f_{RF\_u}$ is the radio-frequency frequency of the upstream radio frequency signal; a multiplexing/demultiplexing unit, configured to multiplex through wavelength division downstream optical signals outputted from each transmitting unit and transmit the multiplexed downstream optical signals to an ONU via an optical distribution network, ODN; and wavelength division demultiplex the multiplexed upstream optical wave of each ONU which is transmitted by an ODN, and then output the demultiplexed upstream optical signals; and

at least one receiving unit, configured to obtain an upstream signal from the demultiplexed upstream optical signals.

An embodiment of the present disclosure further provides a passive optical network, including an optical line terminal, OLT, an optical distribution network, ODN, and, at least one optical network unit, ONU, wherein the OLT comprises any one of claims 1 to 4;

the ONU, configured to receive the combined downstream optical signal transmitted by an ODN, divide the combined downstream optical signal into two parts; detect one part of the downstream optical signal to obtain the downstream radio frequency signal in the downstream optical signal after photoelectric conversion; modulates the upstream radio frequency signal on the other part of the obtained downstream optical signal to generate the upstream optical signal and transmits the upstream optical signal to OLT via ODN.

An embodiment of the present disclosure further provides a radio frequency signal transmission method, including:

> modulating a downstream radio frequency signal to be transmitted to each optical network unit, ONU, on a downstream optical carrier dedicated for the ONU, combining the modulated downstream optical carrier for the ONU and two upstream optical carriers dedicated for the ONU, and after multiplexing each combined downstream optical signal for each wavelength division ONU, transmitting the multiplexed optical signal to the ONU via an optical distribution network, ODN, by an optical line terminal, OLT;
>
> wherein the two upstream optical carriers dedicated for the ONU are configured to carry upstream radio frequency signals of the ONU;
>
> wherein the carrier frequencies of the two upstream optical carriers dedicated for the ONU are $f_{c1}$ and $f_{c3}$, which meet the condition $f_{c3}-f_{c1}=2\times f_{RF\_u}$, wherein $f_{RF\_u}$ is the radio-frequency frequency of the upstream radio frequency signal;
>
> in the upstream direction:
>
>> receiving the wavelength division multiplexed upstream optical wave of each ONU which is transmitted from an ODN, and demultiplexing the multiplexed upstream optical wavelength division wave, and obtaining the upstream signal from each demultiplexed upstream optical signal, by an OLT.

It can be seen from the description of the above technical solution that, by combining one dedicated downstream optical carrier and two dedicated upstream optical carriers for an ONU, wavelength division multiplexing each combined downstream optical carrier and then transmitting them, on the basis of realizing a colorless ONU, the optical carrier may carry more signals, the large-capacity bandwidth resources of the optical fiber network are fully used, and the bandwidth of the wireless access network is enhanced. Moreover, by modulating the upstream radio frequency signal on the two upstream optical carriers, the power spectrum of a modulation signal is enhanced, the processing procedure of amplifying the upstream optical signal by the ONU is omitted, and the design of the ONU is simple upstream.

## BRIEF DESCRIPTION OF THE DRAWINGS

> Fig.1 is a schematic diagram (I) illustrating the configuration of the passive optical network according to an embodiment of the present disclosure;
> Fig.2 is a schematic diagram illustrating the frequency relationship among three optical carriers according to an embodiment of the present disclosure;
> Fig.3 is a schematic diagram illustrating a signal spectrum in the combined downstream optical carrier according to an embodiment of the present disclosure;
> Fig.4 is a schematic diagram illustrating the signal spectrum in the wavelength division multiplexed downstream optical carrier according to an embodiment of the present disclosure;
> Fig.5 is a schematic diagram illustrating the signal spectrum in an upstream optical carrier according to an embodiment of the present disclosure; and
> Fig.6 is a schematic diagram (II) illustrating the configuration of the passive optical network according to an embodiment of the present disclosure.

## DETAILED DESCRIPTION OF THE EMBODIMENTS

A passive optical network according to an embodiment of the present disclosure is described below.

The passive optical network according to an embodiment of the present disclosure includes: an Optical Line Terminal (OLT), an Optical Distribution Network (ODN), and at least one Optical Network Unit (ONU). Generally, there is a plurality of ONUs. The ONU has dedicated optical carriers; that is, each ONU correspondingly has dedicated optical carriers, one ONU having two dedicated upstream optical carriers and one dedicated downstream optical carrier.

The OLT includes: a transmitting unit, a multiplexing/demultiplexing unit and a receiving unit. There are one or more transmitting units and one or more receiving units. One transmitting unit corresponds to one ONU, and one receiving unit corresponds to one ONU. The number of the transmitting units and the number of the receiving units may be related to that of an ONU.

The process of transmitting, by OLT, the downstream radio frequency signal to a plurality of ONUs is as follows:

> Each transmitting unit provides one dedicated downstream optical carrier and two dedicated upstream optical carriers for an ONU corresponding to the transmitting unit. The two dedicated upstream optical carriers for an ONU provided by the transmitting unit are transmitted to the corresponding ONU, and the two dedicated upstream optical carriers for the ONU are configured to carry the upstream radio frequency signal transmitted to an OLT by the ONU; that is, the ONU modulates the upstream radio frequency signal on the upstream optical carriers provided by the transmitting unit of the OLT, and are transmitted to the OLT via an ODN, thereby realizing a colorless ONU.

To ensure that the OLT may accurately detect the upstream optical signal and guarantee the sensitiveness of the receiving unit of the OLT, the two dedicated upstream optical carriers provided by the transmitting unit for one ONU may meet a certain condition, for example, the carrier frequencies of the two dedicated upstream optical carriers provided by the transmitting unit for the ONU are $f_{c1}$ and $f_{c3}$, then the condition that $f_{c1}$ and $f_{c3}$ need to meet may be the following condition:

$$f_{c3} - f_{c1} = 2 \times f_{RF\_u,}$$

where $f_{RF\_u}$ is the radio-frequency frequency of the upstream radio frequency signal.

The condition met by the two dedicated upstream optical carriers for the ONU may be in other forms, for example, little adjustment could be made to the left part and the right part of the above equation.

The transmitting unit modulates the downstream radio frequency signal transmitted to the ONU on the dedicated downstream optical carrier for the ONU. The modulation may be carrier suppressed double sideband modulation and may be any other existing modulation method, for example, Double Sideband modulation. The modulation method for modulating the downstream radio frequency signal on the downstream optical carrier is not limited in an embodiment of the present disclosure. The radio-frequency frequency of the downstream radio frequency signal may be in waveband of millimeter wave. After the modulation is completed, the transmitting unit combines the modulated downstream optical carrier and the two dedicated upstream optical carriers for the ONU and outputs the combined downstream optical signal.

The multiplexing/demultiplexing unit in the OLT wavelength division multiplexes the combined downstream optical signal outputted by each transmitting unit, and outputs the downstream optical wave wavelength division multiplexed.

The downstream optical wave outputted by the multiplexing/demultiplexing unit is transmitted to the ONU via an ODN, for example, the downstream optical wave outputted by the multiplexing/demultiplexing unit is transmitted to the remote node with the Wavelength Division Demultiplexing function in an ODN via an optical fiber, the downstream optical wave in the optical fiber is demultiplexed to the plurality of combined downstream optical signals by the remote node, and then the demultiplexed downstream optical signals are transmitted to different ONUs.

An ONU receives the combined downstream optical signal transmitted by an ODN, and divides the combined downstream optical signal into two parts. The ONU detects one part of the downstream optical signal (that is to perform photoelectric conversion) to obtain the downstream radio frequency signal in the downstream optical signal after photoelectric conversion. The other part of the downstream optical signal may be configured to carry the upstream radio frequency signal. After the ONU detects the downstream radio frequency signal, the downstream radio frequency signal may be processed with a plurality of methods. For example, the downstream radio frequency signal is transmitted directly via the antenna; or the downstream radio frequency signal is subject to down conversion and the signal after the down conversion is transmitted to a user terminal via a transmission medium such as a copper wire. The specific processing method for the downstream radio frequency signal after an ONU detects the downstream radio frequency signal is not limited in the embodiment of the present disclosure.

The process of transmitting upstream radio frequency signals to an OLT by a plurality of ONUs is as follows.

An ONU directly modulates the upstream radio frequency signal on the other part of the obtained downstream optical signal to generate the upstream optical signal and transmits the upstream optical signal to OLT via ODN. For example, the upstream optical signal is transmitted to the remote note with the Wavelength Division Multiplex function in ODN via optical fiber, and the remote note wavelength division multiplexes the upstream optical signal transmitted from each ONU, and transmits the upstream optical waves wavelength division multiplexed to OLT via optical fiber.

The multiplexing/demultiplexing unit in OLT receives the upstream optical wave transmitted in the optical fiber, wavelength division demultiplexes the upstream optical wave to obtain the upstream optical signal of each ONU and transmits it to the corresponding receiving unit.

After receiving the upstream optical signal transmitted from the multiplexing/demultiplexing unit, the receiving unit in OLT obtains upstream signal from the upstream optical signal. For example, the receiving unit detects the upstream optical signal and performs down conversion on the detected upstream optical signal, thereby obtaining the down-converted upstream signal. The receiving unit may detect the upstream optical signal by adopting the optical heterodyne detection method. Certainly, other existing detection methods may be used to perform the detection, for example, photodiode detection method could be used. The specific realization method for detecting the upstream optical signal by the receiving unit in OLT is not limited in the embodiment of the present disclosure.

In the process of detecting the upstream optical signal by the receiving unit by adopting the optical heterodyne detection method, the receiving unit may take the optical signal emitted by itself as a local oscillator optical signal, and also may take part of the downstream optical carrier provided by the transmitting unit as the local oscillator signal. In the case that the receiving unit takes the downstream optical carrier as the local oscillator signal, the carrier frequency of the downstream optical carrier $f_{c2}$ may meet the following condition:

$$f_{c2}\text{-}f_{c1} = f_{RF\_u} \pm f_{IF},$$

where $f_{IF}$ is an intermediate frequency, $f_{RF\_u}$ is the radio-frequency carrier frequency of the upstream radio frequency signal, and $f_{c1}$ is the carrier frequency of one upstream optical carrier of the two dedicated upstream optical carriers for ONU.

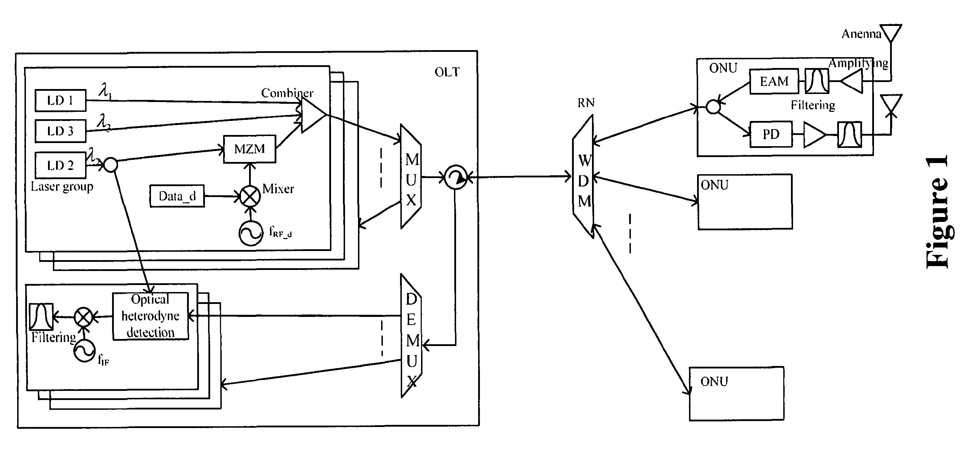

The passive optical network according to an embodiment of the present disclosure is described below with reference to Figs. 1-6.

Fig. 1 is a schematic diagram illustrating the configuration of the passive optical network according to an embodiment of the present disclosure.

It is shown in the passive optical network of Fig.1 that: OLT, a plurality of ONUs, and RN (remote node) in ODN. OLT is connected with RN via optical fiber, and RN is connected with each ONU via optical fiber. OLT includes a plurality of transmitting units, a plurality of receiving units and one multiplexing/demultiplexing unit (that is MUX and DEMUX in Fig.1). One transmitting unit corresponds to one ONU and one receiving unit corresponds to one ONU.

The transmitting unit includes a laser group, a mixer, a Mach-Zehnder modulator (MZM) and a combiner, where the laser group is laser module, the mixer is an up conversion module, the MZM is an external modulation module and the combiner is a combining module.

The receiving unit includes a detecting module and a down conversion module. When performing optical heterodyne detection without using the downstream optical carrier as the local oscillator signal, the detecting module may further include: a local oscillator submodule that generates a local oscillator optical signal, and a detecting submodule that performs optical heterodyne detection by using the local oscillator optical signal generated by the local oscillator submodule.

An ONU includes a Photo Diode (PD) and an electro-absorption modulator (EAM), where PD is the receiving module and EAM is the modulation module.

The process of transmitting the downstream radio frequency signal shown in Fig.1 is as follows.

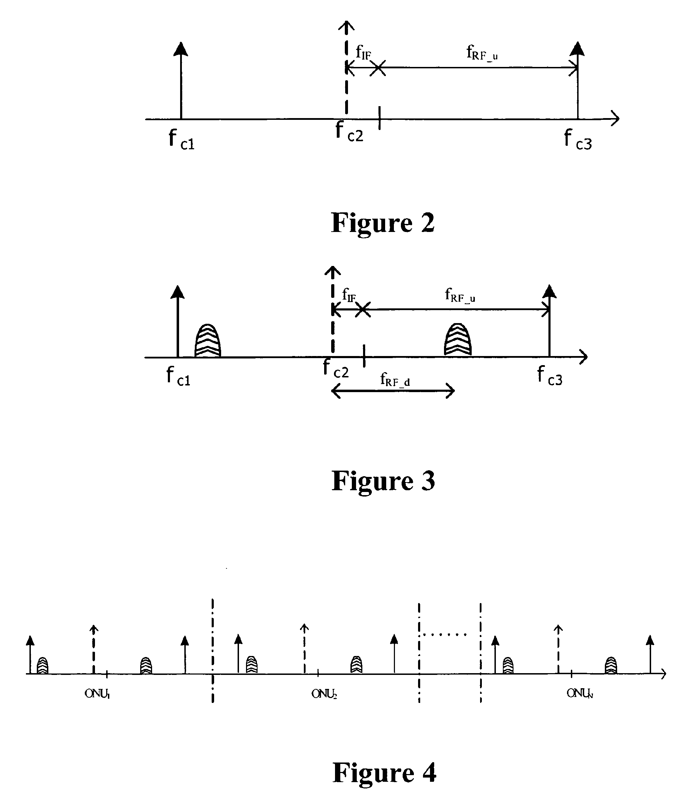

The laser group in each transmitting unit transmits for its corresponding ONU one dedicated downstream optical carrier of the ONU and two dedicated upstream optical carriers. The carrier frequencies of the three optical carriers are set to be $f_{c1}$, $f_{c2}$ and $f_{c3}$, where the optical carrier with the carrier frequency being $f_{c2}$ is taken as the downstream optical carrier, configured to carry the downstream radio frequency signal; the optical carriers with carrier frequencies being $f_{c1}$ and $f_{c3}$ are taken as upstream optical carriers, configured to be down assigned to ONU so as to carry the upstream radio frequency signal. In the case that the receiving unit in OLT performs optical heterodyne detection by adopting the downstream optical carrier as the local oscillator signal, the frequency relationship among the three optical carriers is as shown in Fig.2.

In Fig.2, $f_{RF\_u}$ is the radio-frequency carrier frequency of the upstream radio frequency signal, for example, $f_{RF\_u}$ may be 60 GHz; $f_{RF\_d}$ is the radio-frequency carrier frequency of the downstream radio frequency signal, for example, $f_{RF\_d}$ may be 40 GHz; and $f_{IF}$ is an intermediate frequency, for example, $f_{IF}$ may be 5 GHz.

The condition that the carrier frequencies $f_{c1}$, $f_{c2}$ and $f_{c3}$ of the three optical carriers need to meet may be the following condition:

$$f_{c3}\text{-}f_{c1} = 2 \times f_{RF\_u}$$

$$f_{c2}\text{-}f_{c1} = f_{RF\_u} \pm f_{IF},$$

where $f_{RF\_u}$ is the radio-frequency carrier frequency of the upstream radio frequency signal, and $f_{IF}$ is the intermediate frequency.

The equation $f_{c3}\text{-}f_{c1} = 2 \times f_{RF\_u}$ ensures that after the upstream signal carried on $f_{RF\_u}$ is double-sideband modulated on the two upstream optical carriers $f_{c1}$ and $f_{c3}$ at an ONU, the right sideband signal spectrum of the carrier $f_{c1}$ and the left sideband signal spectrum of the carrier $f_{c3}$ are superposed at the middle point between the two upstream optical carriers, thereby enhancing the power spectrum of the modulated upstream optical signal; the equation $f_{c2}\text{-}f_{c1} = f_{RF\_u} \pm f_{IF}$ ensures that the spectrum of downstream optical carrier $f_{c2}$ is positioned at the left side/the right side of the modulated upstream radio frequency signal spectrum with the spacing being equal to the frequency of an intermediate frequency signal, for example, the spacing is 5 GHz so that when the upstream optical wave is transmitted to an OLT, the upstream optical wave may be coherently mixed with part of the downstream carrier $f_{c2}$ to perform optical heterodyne detection in order to obtain the upstream signal. Due to the reasons such as the modulation method adopted by an ONU, the signal detected by an OLT may be an intermediate frequency signal other than a radio frequency signal. Therefore, in an embodiment of the present disclosure, the signal detected by an OLT is general called an upstream signal.

The dedicated downstream optical carrier for an ONU transmitted by the laser is transmitted to the MZM module and an Rx module (Rx module is optical heterodyne detection in Fig.1) each, where the Rx module is the detecting module. The two upstream optical carriers of an ONU transmitted by the laser are transmitted to the combiner.

The mixer mixes the downstream data for an ONU and the radio frequency carrier with the radio-frequency frequency being in waveband of millimeter wave (for example, the radio-frequency frequency may be 40 GHz) to obtain the downstream radio frequency signal of an ONU and transmit the downstream radio frequency signal to an MZM.

The MZM modulates the downstream radio frequency signal transmitted from the mixer on the downstream optical carrier with the carrier frequency being $f_{c2}$ which is transmitted from the laser, by using the Carrier Supressed Double Sideband Modulation method, and transmits the modulated downstream optical carrier to the combiner.

The modulated downstream optical carrier and the two upstream optical carriers with carrier frequencies being $f_{c1}$ and $f_{c3}$ are combined at the combiner to generate the downstream optical signal. The combiner transmits the downstream optical signal to the MUX. The signal spectrum of the downstream optical signal combined by the combiner is as shown in Fig.3. In Fig.3, the shaded area is the signal spectrum in the combined downstream optical signal.

An MUX multiplexes by wavelength division the combined downstream optical signal transmitted from each combiner, and then transmits the downstream optical wave multiplexed by wavelength division to an RN via optical fiber. Dedicated upstream/downstream optical carriers for different ONUs may adopt different optical wavelengths. The signal spectrum in the downstream optical waves multiplexed by wavelength division is as shown in Fig.4.

An RN has the function of multiplexing/demultiplexing. In this embodiment, if the spacing between the two upstream optical carriers with carrier frequencies being $f_{c1}$ and $f_{c3}$ is 120 GHz, RN may select and use a wavelength division apparatus with 400 GHz channel spacing.

The RN receives the downstream optical wave transmitted from an OLT in optical fiber, and demultiplexes out the upstream optical carriers and modulated downstream optical carrier belonging to each ONU from the downstream optical wave. RN transmits the upstream optical carriers and the modulated downstream optical carrier belonging to each ONU to each ONU by the distributed optical fiber connected with each ONU. The upstream optical carriers and the modulated downstream optical carrier consitute downstream optical signal.

An ONU receives the upstream optical carriers and the modulated downstream optical carrier transmitted from an RN, and divides the received downstream optical signal into two parts and provides the two parts for a PD and an EAM separately. The PD may detect one part of the received downstream optical signal to obtain the downstream radio frequency signal carried on the downstream optical carrier. Then the PD outputs the detected downstream radio frequency signal, which may be transmitted directly via an antenna after processes such as filtering and amplification.

The process of transmitting the upstream radio frequency signal in Fig.1 is as follows.

An EAM modulates the other part of the received downstream optical signal. Since an OLT modulates the downstream radio frequency signal by adopting the carrier suppressed double sideband modulation method, the downstream optical carrier for modulating the downstream radio frequency signal is suppressed. Therefore, an ONU may directly modulate the upstream radio frequency signal on the other part of the downstream optical signal, which is equivalent to the fact that the ONU modulates the upstream radio frequency signal on the combined two upstream optical carriers. The ONU modulates the upstream radio frequency signal on the downstream optical signal to generate the upstream optical signal and then output the upstream optical signal.

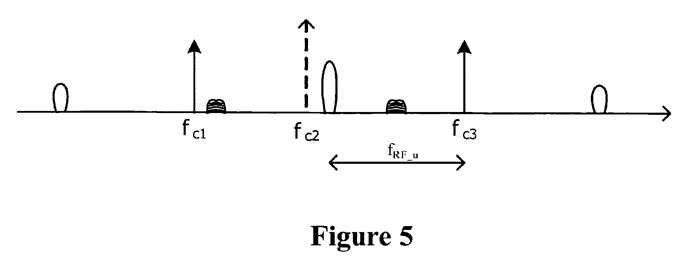

The signal spectrum in the upstream optical carriers modulated by EAM is as shown in Fig.5. In Fig.5, the spectrum of the white part is the signal spectrum in the modulated upstream optical carriers.

The upstream optical carrier modulated by EAM, which is the upstream optical signal, is transmitted to RN via optical fiber. RN wavelength division multiplexes the upstream optical signal of each ONU to obtain the upstream optical wave, and transmit it to the OLT via optical fiber.

The OLT receives the upstream optical wave wavelength division multiplexed and transmitted via optical fiber, and the DEMUX in OLT wavelength division demultiplexes the upstream optical wave to obtain the modulated upstream optical carrier of each ONU, that is the upstream optical signal. The DEMUX transmits the modulated upstream optical carrier of each ONU to the receiving unit corresponding to the ONU.

The detecting module in the receiving unit performs optical heterodyne detection to the modulated upstream optical carrier by using part of the downstream optical carrier transmitted by the corresponding transmitting module; that is, the detecting module takes the part of the downstream optical carrier with carrier frequency $f_{c2}$ transmitted by the transmitting module as the local oscillator optical signal, the local oscillator optical signal is coherently mixed with the modulated upstream optical carrier transmitted from DEMUX, and then the mixed signal is subject to optical heterodyne detection to obtain the upstream signal carried on the intermediate frequency band $f_{IF}$, and to output the upstream signal.

When the detecting module in the receiving unit includes a local oscillator submodule and a detecting submodule, the local oscillator optical signal provided for the detecting submodule may be the optical signal transmitted by the local oscillator submodule. The detecting submodule in the detecting module performs optical heterodyne detection to the upstream optical signal transmitted from DEMUX by using the local oscillator signal provided by the local oscillator submodule, to obtain the upstream signal and output it.

The down conversion module performs down conversion on the upstream signal transmitted by the detecting module to obtain an upstream baseband signal.

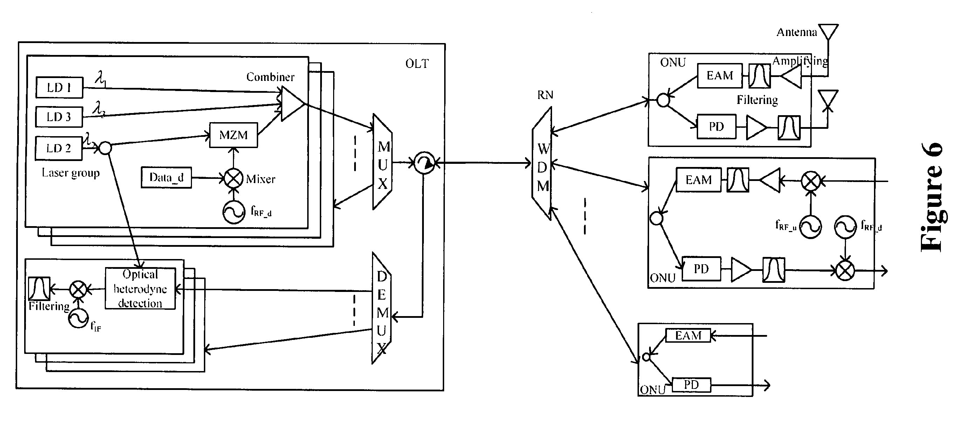

The passive optical network according to an embodiment of the present disclosure may be converted into the passive optical network as shown in Fig.6 by slight change.

The passive optical network in Fig.6 is same as that shown in Fig.1 basically, with the difference that an ONU may include a PD, an EAM and a down conversion module at ONU. That is, the down conversion module may perform down conversion on the downstream radio frequency signal detected by the PD, and the downstream signal subjected to down conversion is transmitted to the user terminal in wired way such as a copper wire. In addition, the passive optical network may further include an ONU unit in a Wavelength Division Multiplex (WDN) PON, and the OLT shall include a transmitting unit and a receiving unit in WDM PON. A multi-wavelength optical signal in a WDM PON and the optical wave signal in the embodiment of the present disclosure are transmitted in a shared optical fiber via the multiplexing/demultiplexing module in an OLT and WDM device of the RN wavelength division node multiplexing. The units are existing units, so the procedure of processing the upstream signal and the downstream signal by them is not explained in detail here. The passive optical network in Fig.6 may realize wireless business and wired business simultaneously.

It may be seen from the description on the above passive optical network that the passive optical network according to an embodiment of the present disclosure may be a hybrid passive optical network composed of a WDM PON and a Radio over Fiber (RoF) network. The transmitting unit in the OLT according to an embodiment of the present disclosure provides dedicated optical carrier for each ONU and combines the upstream and downstream optical carriers dedicated for an ONU. The multiplexing/demultiplexing unit in the OLT wavelength division multiplexes the combined downstream optical signal of each ONU so that the downstream optical wave wavelength division multiplexed may carry more signals, thereby making full use of the large-capacity bandwidth resources of the optical fiber network and enhancing the bandwidth of the wireless access network. Moreover, the modulation of the upstream radio frequency signal on the two optical carriers enhances the power spectrum of the modulation signal, and improves the detection sensitivity of the receiving unit of the OLT on the upstream signal. The receiving unit of the OLT further improves the detection sensitivity on the upstream signal by adopting the optical heterodyne technology. Therefore, there does not need to use an amplifying module at an ONU, thereby making the design of an ONU simple.

As such, the hybrid passive optical network according to an embodiment of the present disclosure not only makes full use of respective advantage of the two networks, but also ensures that the technical features of the two networks to support each other, and the technical effect that both the two networks cannot achieve is obtained. Therefore, the hybrid optical network according to an embodiment of the present disclosure is a passive optical network with wide access bandwidth and low construction cost.

The OLT provided according to an embodiment of the present disclosure is described below.

The OLT provided according to an embodiment of the present disclosure includes: a plurality of transmitting units, a plurality of receiving units and one multiplexing/demultiplexing unit. One transmitting unit corresponds to one ONU and one receiving unit corresponds to one ONU.

The transmitting unit includes a laser module, an up conversion module, an external modulation module and a combining module. The receiving unit includes a detecting module and a down conversion module. When performing optical heterodyne detection without using the downstream optical carrier as the local oscillator signal, the detecting module may further include: a local oscillator submodule that generates a local oscillator optical signal, and a detecting submodule that performs optical heterodyne detection by using the local oscillator optical signal generated by the local oscillator submodule.

The operation performed by each module refers to the description of the above passive optical module, and is not repeatedly described herein.

The radio frequency signal transmission method provided according to an embodiment of the present disclosure is described below.

The process of transmitting the downstream radio frequency signal is as follows.

An OLT provides one downstream optical carrier and two upstream optical carriers with respect to each ONU. The carrier frequencies of the three optical carriers are set to be $f_{c1}$, $f_{c2}$ and $f_{c3}$, where the optical carrier with the carrier frequency $f_{c2}$ is taken as the downstream optical carrier, configured to carry the downstream radio frequency signal; the optical carriers with carrier frequencies $f_{c1}$ and $f_{c3}$ are taken as upstream optical carriers, configured to be assigned to an ONU so as to carry the upstream radio frequency signal. The condition that the above $f_{c1}$ and $f_{c3}$ need to meet may be the condition as follows:

$$f_{c3}\text{-}f_{c1}=2\times f_{RF\_u},$$

where $f_{RF\_u}$ is the radio-frequency frequency of the upstream radio frequency signal.

In the case that the OLT performs optical heterodyne detection by adopting the downstream optical carrier as the local oscillator signal, the condition that $f_{c2}$ needs to meet may be the condition as follows:

$$f_{c2}\text{-}f_{c1}=f_{RF\_u}\pm f_{IF},$$

where $f_{RF\_u}$ is the radio-frequency carrier frequency of the upstream radio frequency signal, and $f_{IF}$ is an intermediate frequency.

The OLT mixes the downstream data for each ONU and the radio frequency carrier with the radio-frequency frequency being in waveband of millimeter wave (for example, the radio-frequency frequency may be 40 GHz) to obtain the downstream radio frequency signal for each ONU. The OLT modulates the downstream radio frequency signal for each ONU on the downstream optical carrier provided by the OLT for each ONU by using the carrier suppressed double sideband modulation method. For example, The OLT modulates the downstream radio frequency signal for each ONU on the downstream optical carrier with the carrier frequency of $f_{c2}$ for the ONU. Dedicated upstream/downstream optical carriers for different ONUs may adopt different wavelengths.

The OLT combines the modulated downstream optical carrier for each ONU and the corresponding upstream optical carriers to generate the downstream optical signal for each ONU. The OLT wavelength division multiplexes the downstream optical signal for each ONU to generate downstream optical wave. Sequentially, the OLT transmits the downstream optical wave wavelength division multiplexed to an RN via optical fiber.

An RN has the function of multiplexing/demultiplexing. In this embodiment, if the spacing between the two upstream optical carriers with carrier frequencies being $f_{c1}$ and $f_{c3}$ is 120 GHz, the RN may select and use a wavelength division apparatus with channel spacing being 400 GHz.

The RN receives the downstream optical wave transmitted from the OLT in optical fiber, and demultiplexes out the upstream optical carriers and modulated downstream optical carrier belonging to each ONU from the downstream optical wave. RN transmits the upstream optical carriers and the modulated downstream optical carrier belonging to each ONU to each ONU through the distributed optical fiber connected with each ONU. The upstream optical carriers and the modulated downstream optical carrier consists downstream optical signal.

An ONU receives the upstream optical carriers and the modulated downstream optical carrier transmitted from the RN, divides the received downstream optical signal into two parts, where one part of the downstream optical signal is used to detect the downstream radio frequency signal to obtain the downstream radio frequency signal carried on the downstream optical carrier, and the other part of the downstream optical signal is configured to modulate the upstream radio frequency signal. The ONU may detect the downstream radio frequency signal by adopting detection methods such as photodiode detection. After detecting the downstream radio frequency signal, the ONU may process the downstream radio frequency signal with various methods; for example, the downstream radio frequency signal may be transmitted directly via the antenna after being filtered and amplified; or the downstream radio frequency signal is subject to down conversion and the down converted signal is transmitted to the user terminal via a transmission medium such as a copper wire. The specific processing method for the downstream radio frequency signal after an ONU detects the downstream radio frequency signal is not limited in the embodiment of present disclosure.

The process of transmitting the upstream radio frequency signal is as follows.

An ONU performs modulation of the upstream radio frequency signal on the other part of the received downstream optical signal. In the even that the OLT modulates the downstream radio frequency signal by adopting the carrier suppressed double sideband modulation method, the downstream optical carrier is suppressed. At this time, the ONU may directly modulate the upstream radio frequency signal on the other part of the downstream optical signal; that is, the ONU modulates the upstream radio frequency signal on the combined two upstream optical carriers. The ONU modulates the upstream radio frequency signal on the downstream optical signal to generate the upstream optical signal and transmits the upstream optical signal to an RN via optical fiber.

An RN multiplexes the upstream optical signal of each ONU to obtain upstream optical wavelength division wave, the optical wave is transmitted to the OLT via optical fiber.

The OLT receives the upstream optical wave wavelength division multiplexed transmitted via optical fiber, and wavelength division demultiplexes the upstream optical wave, to obtain the upstream optical signal of each ONU. Subsequently, the OLT performs optical heterodyne detection on the upstream optical signal of each ONU by using the downstream optical carrier provided for each ONU; that is, the OLT uses part of the downstream optical carrier with carrier frequency being $f_{c2}$ for each ONU as a local oscillator optical signal, the local oscillator optical signal of each ONU is mixed with the upstream optical signal of each ONU coherently, and the upstream signal of each ONU carried on the intermediate frequency band $f_{IF}$ is obtained through optical heterodyne detection. It is certain that the OLT may also use the optical signal emitted by itself as the local oscillator signal to perform optical heterodyne detection on the upstream optical signal.

The OLT may perform down conversion on the detected upstream signal to obtain the upstream baseband signal.

It may be seen from the above description on the radio frequency transmission that the OLT according to an embodiment of the present disclosure provides the dedicated optical carriers for each ONU, and combines the dedicated upstream and downstream optical carriers for an ONU, and wavelength division multiplexes the combined downstream optical signal for each ONU, so that the downstream optical wave wavelength division multiplexed can carry more signals, thereby making full use of the large-capacity bandwidth resources of the optical fiber network and enhancing the bandwidth of the wireless access network. In addition, the modulation of the upstream radio frequency signal on the two upstream optical carriers enhances the power spectrum of the modulation signal, and improves the detection sensitivity of the OLT on the upstream signal. The OLT further improves the detection sensitivity on the upstream signal by adopting the optical heterodyne technology. Therefore, an amplifying module at an ONU does not need to be used, thereby making the design of an ONU simple.

Although the present disclosure is described through embodiments, persons skilled in the art know that there are a lot of variations and changes without departing from the scope of the present disclosure. The claims of the application document of the present disclosure include such variations and changes.

## Claims

1. An optical line terminal, wherein the terminal comprises:

   at least one transmitting unit, configured to provide an optical network unit, ONU, with one downstream optical carrier and two upstream optical carriers dedicated for the ONU, wherein the transmitting unit is configured to modulate the downstream radio frequency signal which needs to be transmitted to an ONU on the downstream optical carrier dedicated for the ONU, and, after combining the modulated downstream optical carrier with the two upstream optical carriers dedicated for the ONU, output a downstream optical signal; the two upstream optical carriers dedicated for the ONU are configured to carry upstream radio frequency signals of the ONU; wherein the carrier frequencies of the two upstream optical carriers provided for the ONU by the transmitting unit are $f_{c1}$ and $f_{c3}$, which meet the condition $f_{c3}-f_{c1}=2\times f_{RF\_u}$, wherein $f_{RF\_u}$ is the radio-frequency frequency of the upstream radio frequency signal;
   a multiplexing/demultiplexing unit, configured to multiplex through wavelength division downstream optical signals outputted from each transmitting unit and transmit the multiplexed downstream optical signals to an ONU via an optical distribution network, ODN; and wavelength division demultiplex the multiplexed upstream optical wave of each ONU which is transmitted by an ODN, and then output the demultiplexed upstream optical signals; and
   at least one receiving unit, configured to obtain an upstream signal from the demultiplexed upstream optical signals.

2. The optical line terminal according to claim 1, wherein the transmitting unit comprises:

   a laser module, configured to provide one downstream optical carrier and two upstream optical carriers dedicated for an ONU;
   an up conversion module, configured to mix the downstream data transmitted to an ONU and the radio frequency carrier whose the radio-frequency frequency is in waveband of millimeter wave, and obtain the downstream radio frequency signal for an ONU;
   an external modulation module, configured to modulate the downstream radio frequency signal for an ONU on the downstream optical carrier dedicated for the ONU through carrier suppressed double sideband modulation, and output the modulated downstream radio frequency signal; and
   a combining module, configured to combine the two upstream optical carriers for an ONU and the downstream optical carrier outputted from the external modulation module, and output the combined downstream optical signal.

3. The optical line terminal according to claim 1, wherein the receiving unit comprises:

   a detecting module, configured to perform optical heterodyne detection on the upstream optical signal of an ONU and output the detected upstream signal; and
   a down conversion module, configured to perform down conversion on the detected upstream signal and obtain an upstream baseband signal.

4. The optical line terminal according to claim 3, wherein the detecting module uses part of the downstream optical carrier provided by the transmitting unit as a local oscillator signal, and performs the optical heterodyne detection on the upstream optical signal of an ONU by using the local oscillator signal; the carrier frequency of the downstream optical carrier is $f_{c2}$, which meets the condition: $f_{c2}-f_{c1}=f_{RF\_u}\pm f_{IF}$; wherein

   $f_{IF}$ is an intermediate frequency, $f_{RF\_u}$ is the radio frequency carrier frequency of the upstream radio frequency signal, and $f_{c1}$ is the carrier frequency of one upstream optical carrier of the two upstream optical carriers dedicated for the ONU;
   or
   the detecting module comprises:

   a local oscillator submodule, configured to generate a local oscillator optical signal; and
   a detecting submodule, configured to perform optical heterodyne detection on the upstream optical signal of an ONU by using the local oscillator optical signal generated by the local oscillator submodule, and output the detected upstream signal.

**5.** A passive optical network, comprising an optical line terminal, OLT, an optical distribution network, ODN, and, at least one optical network unit, ONU, wherein the OLT comprises the features of any one of claims 1 to 4; the ONU, configured to receive the combined downstream optical signal transmitted by an ODN, divide the combined downstream optical signal into two parts; detect one part of the downstream optical signal to obtain the downstream radio frequency signal in the downstream optical signal after photoelectric conversion; modulates the upstream radio frequency signal on the other part of the obtained downstream optical signal to generate the upstream optical signal and transmits the upstream optical signal to OLT via ODN.

**6.** A radio frequency signal transmission method, wherein the method comprises:

 in the downstream direction:

  modulating a downstream radio frequency signal to be transmitted to each optical network unit, ONU, on a downstream optical carrier dedicated for the ONU, combining the modulated downstream optical carrier for the ONU and two upstream optical carriers dedicated for the ONU, and after multiplexing each combined downstream optical signal for each wavelength division ONU, transmitting the multiplexed optical signal to the ONU via an optical distribution network, ODN, by an optical line terminal, OLT; wherein the two upstream optical carriers dedicated for the ONU are configured to carry upstream radio frequency signals of the ONU; wherein the carrier frequencies of the two upstream optical carriers dedicated for the ONU are $f_{c1}$ and $f_{c3}$, which meet the condition $f_{c3}-f_{c1}=2\times f_{RF\_u}$, wherein $f_{RF\_u}$ is the radio-frequency frequency of the upstream radio frequency signal;

 in the upstream direction:

  receiving the wavelength division multiplexed upstream optical wave of each ONU which is transmitted from an ODN, and demultiplexing the multiplexed upstream optical wavelength division wave, and obtaining the upstream signal from each demultiplexed upstream optical signal, by an OLT.

**7.** The method according to claim 6, wherein the downstream radio frequency signal in the method comprises the downstream radio frequency signal for an ONU obtained by mixing the downstream data to be transmitted to an ONU and the radio frequency carrier whose the radio-frequency frequency is in waveband of millimeter wave.

**8.** The method according to claim 6, wherein modulating the downstream radio frequency signal for the ONU on the downstream optical carrier dedicated for the ONU comprises:

 modulating the downstream radio frequency signal for an ONU on the downstream optical carrier dedicated for the ONU by carrier suppressed double sideband modulation.

**9.** The method according to claim 6, wherein obtaining the upstream signal comprises:

 performing optical heterodyne detection on the upstream optical signal transmitted via an ODN by an ONU to obtain the upstream signal, and performing down conversion on the obtained upstream signal to obtain the upstream baseband signal, by the OLT.

**10.** The method according to claim 9, wherein performing optical heterodyne detection on the upstream optical signal transmitted via an ODN by an ONU, by the OLT comprises:

 using part of the downstream optical carrier dedicated for an ONU as the local oscillator optical signal, and performing optical heterodyne detection on the upstream optical signal of an ONU by using the local oscillator signal, by the OLT, wherein the carrier frequency of the downstream optical carrier is $f_{c2}$, and $f_{c2}$ meets the condition that $f_{c2}-f_{c1}=f_{RF\_u}\pm f_{IF}$, wherein $f_{IF}$ is an intermediate frequency, $f_{RF\_u}$ is the radio frequency carrier frequency of the upstream radio frequency signal, and $f_{c1}$ is the carrier frequency of one upstream optical carrier of the two upstream optical carriers dedicated for an ONU;

 or performing optical heterodyne detection comprises:

  generating a local oscillator optical signal, and performing optical heterodyne detection on the upstream optical signal of an ONU by using the generated local oscillator signal, by the OLT.

**Patentansprüche**

**1.** Optisches Leitungsterminal, wobei das Terminal Folgendes umfasst:

mindestens eine Sendeeinheit, die dafür ausgelegt ist, einer optischen Netzwerkeinheit, ONU, einen optischen Downstream-Träger und zwei optische Upstream-Träger, die für die ONU gewidmet sind, bereitzustellen, wobei die Sendeeinheit dafür ausgelegt ist, das Downstream-Hochfrequenzsignal, das zu einer ONU auf dem für die ONU gewidmeten optischen Downstream-Träger gesendet werden muss, zu modulieren und nach dem Kombinieren des modulierten optischen Downstream-Trägers mit den zwei optischen Upstream-Trägern, die für die ONU gewidmet sind, ein optisches Downstream-Signal auszugeben; die zwei für die ONU gewidmeten optischen Upstream-Träger dafür ausgelegt sind, Upstream-Hochfrequenzsignale der ONU zu führen; wobei die Trägerfrequenzen der zwei durch die Sendeeinheit der ONU bereitgestellten optischen Upstream-Träger $f_{c1}$ und $f_{c3}$ sind, die der Bedingung $f_{c3}-f_{c1}=2 \times f_{RF\_u}$ genügen, wobei $f_{RF\_u}$ die Hochfrequenz-Frequenz des Upstream-Hochfrequenzsignals ist; eine Multiplexer-/Demultiplexereinheit, die dafür ausgelegt ist, durch Wellenlängenmultiplexen von jeder Sendeeinheit ausgegebene optische Downstream-Signale zu multiplexen und die gemultiplexten optischen Downstream-Signale über ein optisches Verteilungsnetzwerk, ODN, zu einer ONU zu senden; und die gemultiplexte optische Upstream-Welle jeder ONU, die durch ein ODN gesendet wird, Wellenlägen zu demultiplexen und die gedemultiplexten optischen Upstream-Signale dann auszugeben; und

mindestens eine Empfangseinheit, die dafür ausgelegt ist, ein Upstream-Signal aus den gedemultiplexten optischen Upstream-Signalen zu erhalten.

2. Optisches Leitungsterminal nach Anspruch 1, wobei die Sendeeinheit Folgendes umfasst:

ein Lasermodul, das dafür ausgelegt ist, einen optischen Downstream-Träger und zwei optische Upstream-Träger, die für eine ONU gewidmet sind, bereitzustellen;
ein Aufwärtsumsetzungsmodul, das dafür ausgelegt ist, die zu einer ONU gesendeten Downstream-Daten und den Hochfrequenzträger, dessen Hochfrequenz-Frequenz im Wellenband der Millimeterwelle liegt, zu mischen und das Downstream-Hochfrequenzsignal für eine ONU zu erhalten;
ein Extern-Modulationsmodul, das dafür ausgelegt ist, das Downstream-Hochfrequenzsignal für eine ONU auf dem für die ONU gewidmeten optischen Downstream-Träger durch trägerunterdrückte Doppelseitenbandmodulation zu modulieren und das modulierte Downstream-Hochfrequenzsignal auszugeben; und ein Kombiniermodul, das dafür ausgelegt ist, die zwei optischen Upstream-Träger für eine ONU und den optischen Downstream-Träger, der von dem Extern-Modulationsmodul ausgegeben wird, zu kombinieren und das kombinierte optische Downstream-Signal auszugeben.

3. Optisches Leitungsterminal nach Anspruch 1, wobei die Empfangseinheit Folgendes umfasst:

ein Detektionsmodul, das dafür ausgelegt ist, optische Überlagerungsdetektion an dem optischen Upstream-Signal einer ONU auszuführen und das detektierte Upstream-Signal auszugeben; und
ein Abwärtsumsetzungsmodul, das dafür ausgelegt ist, Abwärtsumsetzung an dem detektierten Upstream-Signal auszuführen und ein Upstream-Basisbandsignal zu erhalten.

4. Optisches Leitungsterminal nach Anspruch 3, wobei das Detektionsmodul einen Teil des durch die Sendeeinheit bereitgestellten optischen Downstream-Trägers als ein Empfangsoszillatorsignal verwendet und die optische Überlagerungsdetektion an dem optischen Upstream-Signal einer ONU durch Verwendung des Empfangsoszillatorsignals ausführt; die Trägerfrequenz des optischen Downstream-Trägers $f_{c2}$ ist, die der Bedingung $f_{c2} - f_{c1} = f_{RF\_u} \pm f_{IF}$ genügt; wobei
$f_{IF}$ eine Zwischenfrequenz, $f_{RF\_u}$ die Hochfrequenz-Trägerfrequenz des Upstream-Hochfrequenzsignals und $f_{c1}$ die Trägerfrequenz eines optischen Upstream-Trägers der zwei für die ONU gewidmeten optischen Upstream-Träger ist; oder
das Detektionsmodul Folgendes umfasst:

ein Empfangsoszillator-Submodul, das dafür ausgelegt ist, ein optisches Empfangsoszillatorsignal zu erzeugen; und
ein Detektions-Submodul, das dafür ausgelegt ist, optische Überlagerungsdetektion an dem optischen Upstream-Signal einer ONU durch Verwendung des durch das Empfangsoszillator-Submodul erzeugten optischen Empfangsoszillatorsignals auszuführen und das detektierte Upstream-Signal auszugeben.

5. Passives optisches Netzwerk, das ein optisches Leitungsterminal, OLT, ein optisches Verteilungsnetzwerk, ODN, und mindestens eine optische Netzwerkeinheit, ONU, umfasst, wobei das OLT die Merkmale eines beliebigen der Ansprüche 1 bis 4 umfasst;

wobei die ONU dafür ausgelegt ist, das durch ein ODN gesendete kombinierte optische Downstream-Signal zu empfangen, das kombinierte optische Downstream-Signal in zwei Teile aufzuteilen; einen Teil des optischen Downstream-Signals zu detektieren, um das Downstream-Hochfrequenzsignal in dem optischen Downstream-Signal nach fotoelektrischer Umwandlung zu erhalten; das Upstream-Hochfrequenzsignal auf dem anderen Teil des erhaltenen optischen Downstream-Signals zu modulieren, um das optische Upstream-Signal zu erzeugen, und das optische Upstream-Signal über das ODN zu dem OLT zu senden.

6. Hochfrequenz-Signalübertragungsverfahren, wobei das Verfahren Folgendes umfasst:

in der Downstream-Richtung:

Modulieren eines zu jeder optischen Netzwerkeinheit, ONU, auf einem für die ONU gewidmeten optischen Downstream-Träger zu sendenden Downstream-Hochfrequenzsignals, Kombinieren des modulierten optischen Downstream-Trägers für die ONU und zweier für die ONU gewidmeter optischer Upstream-Träger und nach dem Multiplexen jedes kombinierten optischen Downstream-Signals für jede Wellenlängenmultiplex-ONU, Senden des gemultiplexten optischen Signals zu der ONU über ein optisches Verteilungsnetzwerk, ODN, durch ein optisches Leitungsterminal, OLT; wobei die zwei für die ONU gewidmeten optischen Upstream-Träger dafür ausgelegt sind, Upstream-Hochfrequenzsignale der ONU zu führen; wobei die Trägerfrequenzen der zwei für die ONU gewidmeten optischen Upstream-Träger $f_{c1}$ und $f_{c3}$ sind, die der Bedingung $f_{c3}-f_{c1}=2\mathrm{x}f_{RF\_u}$ genügen, wobei $f_{RF\_u}$ die Hochfrequenz-Frequenz des Upstream-Hochfrequenzsignals ist; in der Upstream-Richtung:

Empfangen der wellenlängengemultiplexten optischen Upstream-Welle jeder ONU, die von einem ODN gesendet wird, und demultiplexen der gemultiplexten optischen Upstream-Wellenlängen-Multiplex-Welle und Erhalten des Upstream-Signals aus jedem gedemultiplexten optischen Upstream-Signal durch ein OLT.

7. Verfahren nach Anspruch 6, wobei das Downstream-Hochfrequenzsignal bei dem Verfahren das Downstream-Hochfrequenzsignal für eine ONU umfasst, das durch Mischen der zu einer ONU zu sendenden Downstream-Daten und des Hochfrequenzträgers, dessen Hochfrequenz-Frequenz im Wellenband der Millimeterwelle liegt, erhalten wird.

8. Verfahren nach Anspruch 6, wobei das Modulieren des Downstream-Hochfrequenzsignals für die ONU auf dem für die ONU gewidmeten optischen Downstream-Träger Folgendes umfasst:

Modulieren des Downstream-Hochfrequenzsignals für eine ONU auf dem für die ONU gewidmeten optischen Downstream-Träger durch trägerunterdrückte Doppelseitenbandmodulation.

9. Verfahren nach Anspruch 6, wobei das Erhalten des Upstream-Signals Folgendes umfasst:

Ausführen von optischer Überlagerungsdetektion an dem durch eine ONU über ein ODN gesendeten optischen Upstream-Signal, um das Upstream-Signal zu erhalten, und Ausführen von Abwärtsumsetzung an dem erhaltenen Upstream-Signal, um das Upstream-Basisbandsignal zu erhalten, durch das OLT.

10. Verfahren nach Anspruch 9, wobei das Ausführen von optischer Überlagerungsdetektion an dem durch eine ONU über ein ODN gesendeten optischen Upstream-Signal durch das OLT Folgendes umfasst:

Verwenden eines Teils des für eine ONU gewidmeten optischen Downstream-Trägers als das optische Empfangsoszillatorsignal und Ausführen von optischer Überlagerungsdetektion an dem optischen Upstream-Signal einer ONU durch Verwendung des Empfangsoszillatorsignals durch das OLT, wobei die Trägerfrequenz des optischen Downstream-Trägers $f_{c2}$ ist und $f_{c2}$ der Bedingung $f_{c2} - f_{c1} = f_{RF\_u} \pm f_{IF}$ genügt, wobei $f_{IF}$ eine Zwischenfrequenz, $f_{RF\_u}$ die Hochfrequenz-Trägerfrequenz des Upstream-Hochfrequenzsignals und $f_{c1}$ die Trägerfrequenz eines optischen Upstream-Trägers der zwei für eine ONU gewidmeten optischen Upstream-Träger ist; oder das Ausführen von optischer Überlagerungsdetektion Folgendes umfasst:

Erzeugen eines optischen Empfangsoszillatorsignals und Ausführen von optischer Überlagerungsdetektion an dem optischen Upstream-Signal einer ONU durch Verwendung des erzeugten Empfangsoszillatorsignals durch das OLT.

**Revendications**

1. Terminal de ligne optique, le terminal comprenant :

au moins une unité d'émission, configurée pour fournir à une unité de réseau optique, ONU (Optical Network Unit), une porteuse optique descendante et deux porteuses optiques montantes réservées à l'ONU, l'unité d'émission étant configurée pour moduler le signal radiofréquence descendant devant être émis vers une ONU sur la porteuse optique descendante réservée à l'ONU et, après combinaison de la porteuse optique descendante modulée aux deux porteuses optiques montantes réservées à l'ONU, fournir en sortie un signal optique descendant ; les deux porteuses optiques montantes réservées à l'ONU étant configurées pour acheminer des signaux radiofréquence montants de l'ONU ; les fréquences porteuses des deux porteuses optiques montantes fournies à l'ONU par l'unité d'émission étant $f_{c1}$ et $f_{c3}$, et respectant la condition suivante : $f_{c3}$- $f_{c1}$ =2 × $f_{RF\_u}$, où $f_{RF\_u}$ est la fréquence radiofréquence du signal radiofréquence montant ;
une unité de multiplexage/démultiplexage configurée pour multiplexer par répartition en longueur d'onde des signaux optiques descendants fournis en sortie par chaque unité d'émission et émettre les signaux optiques descendants multiplexés vers une ONU via un réseau de distribution optique, ODN (Optical Distribution Network) ; et
pour démultiplexer par répartition en longueur d'onde l'onde optique montante multiplexée de chaque ONU qui est émise par un ODN, puis fournir en sortie des signaux optiques montants démultiplexés ; et
au moins une unité de réception, configurée pour obtenir un signal montant à partir des signaux optiques montants démultiplexés.

2. Terminal de ligne optique selon la revendication 1, dans lequel l'unité d'émission comprend :

un module laser, configuré pour fournir une porteuse optique descendante et deux porteuses optiques montantes réservées à une ONU ;
un module de conversion/élévation, configuré pour mélanger les données descendantes émises vers une ONU à la porteuse radiofréquence dont la fréquence radiofréquence est une bande de longueurs d'onde millimétriques, et obtenir le signal radiofréquence descendant destiné à une ONU ;
un module de modulation externe, configuré pour moduler le signal radiofréquence descendant destiné à une ONU sur la porteuse optique descendante réservée à l'ONU par une modulation en bande latérale double à porteuse supprimée, et fournir en sortie le signal radiofréquence descendant modulé ; et
un module de combinaison, configuré pour combiner les deux porteuses optiques montantes destinées à une ONU à la porteuse optique descendante fournie en sortie par le module de modulation externe, et fournir en sortie le signal optique descendant combiné.

3. Terminal de ligne optique selon la revendication 1, dans lequel l'unité de réception comprend :

un module de détection, configuré pour effectuer une détection optique hétérodyne sur le signal optique montant d'une ONU et fournir en sortie le signal montant détecté ; et
un module de conversion/abaissement, configuré pour effectuer une conversion/abaissement sur le signal montant détecté et obtenir un signal montant en bande de base.

4. Terminal de ligne optique selon la revendication 3, dans lequel le module de détection utilise une partie de la porteuse optique descendante fournie par l'unité d'émission en tant que signal d'oscillateur local, et effectue la détection optique hétérodyne sur le signal optique montant d'une ONU en utilisant le signal d'oscillateur local ; la fréquence porteuse de la porteuse optique descendante est égale à $f_{c2}$, et respecte la condition suivante : $f_{c2}$-$f_{c1}$ = $f_{RF\_u}$ ± $f_{IF}$ ; où $f_{IF}$ est une fréquence intermédiaire, $f_{RF\_u}$ est la fréquence porteuse radiofréquence du signal radiofréquence montant, et $f_{c1}$ est la fréquence porteuse d'une porteuse optique montante des deux porteuses optiques montantes réservées à l'ONU ;
ou
le module de détection comprend :

un sous-module oscillateur local, configuré pour générer un signal optique d'oscillateur local ; et
un sous-module de détection, configuré pour effectuer une détection optique hétérodyne sur le signal optique montant d'une ONU en utilisant le signal optique d'oscillateur local généré par le sous-module d'oscillateur local, et fournir en sortie le signal montant détecté.

5. Réseau optique passif, comprenant un terminal de ligne optique, OLT (Optical Line Terminal), un réseau de distribution optique, ODN, et au moins une unité de réseau optique, ONU, l'OLT comprenant les caractéristiques de l'une quelconque des revendications 1 à 4 ;
l'ONU étant configurée pour recevoir le signal optique descendant combiné émis par un ODN, diviser le signal optique descendant combiné en deux parties ;

détecter une partie du signal optique descendant afin d'obtenir le signal radiofréquence descendant contenu dans le signal optique descendant après conversion photoélectrique ; moduler le signal radiofréquence montant sur l'autre partie du signal optique descendant obtenu afin de générer le signal optique montant et transmettre le signal optique montant à l'OLT par l'intermédiaire de l'ODN.

6. Procédé d'émission de signaux radiofréquence, le procédé comprenant :

dans la direction descendante :

la modulation d'un signal radiofréquence descendant devant être émis vers chaque unité de réseau optique, ONU, sur une porteuse optique descendante réservée à l'ONU, la combinaison de la porteuse optique descendante modulée destinée à l'ONU à deux porteuses optiques réservées à l'ONU et, après multiplexage de chaque signal optique descendant combiné pour chaque ONU par répartition en longueur d'onde, la transmission du signal optique multiplexé vers l'ONU par l'intermédiaire d'un réseau de distribution optique, ODN, au moyen d'un terminal de ligne optique, OLT ;
les deux porteuses optiques montantes réservées à l'ONU étant configurées pour acheminer des signaux radiofréquence montants de l'ONU ;
les fréquences porteuses des deux porteuses optiques montantes réservées à l'ONU étant $f_{c1}$ et $f_{c3}$ et respectant la condition suivante : $f_{c3}$-$f_{c1}$ = $2 \times f_{RF\_u}$, où $f_{RF\_u}$ est la fréquence radiofréquence du signal radiofréquence montant ; et
dans la direction montante :

la réception de l'onde optique montante multiplexée par répartition en longueur d'onde de chaque ONU qui est émise par un ODN, le démultiplexage de l'onde de répartition en longueur d'onde optique montante multiplexée, et l'obtention du signal montant à partir de chaque signal optique montant démultiplexé, au moyen d'un OLT.

7. Procédé selon la revendication 6, dans lequel le signal radiofréquence descendant comprend, conformément au procédé, le signal radiofréquence descendant destiné à une ONU, obtenu en mélangeant les données descendantes devant être émises vers une ONU à la porteuse radiofréquence dont la fréquence radiofréquence se situe dans une bande de longueurs d'onde millimétriques.

8. Procédé selon la revendication 6, dans lequel la modulation du signal radiofréquence descendant destiné à une ONU, sur la porteuse optique descendante réservée à l'ONU, comprend :

la modulation du signal radiofréquence descendant destiné à une ONU sur la porteuse optique descendante réservée à l'ONU par modulation en bande latérale double à porteuse supprimée.

9. Procédé selon la revendication 6, dans lequel l'obtention du signal montant comprend :

l'exécution d'une détection optique hétérodyne sur le signal optique montant émis via un ODN par une ONU afin d'obtenir le signal montant, et l'exécution d'une conversion/abaissement sur le signal montant obtenu afin d'obtenir le signal montant en bande de base, au moyen de l'OLT.

10. Procédé selon la revendication 9, dans lequel l'exécution de la détection optique hétérodyne sur le signal optique montant émis via un ODN par une ONU, au moyen de l'OLT comprend :

l'utilisation d'une partie de la porteuse optique descendante réservée à une ONU en tant que signal optique d'oscillateur local, et l'exécution de la détection optique hétérodyne sur le signal optique montant d'une ONU en utilisant le signal d'oscillateur local, au moyen de l'OLT,
la fréquence porteuse de la porteuse optique descendante étant $f_{c2}$, et $f_{c2}$ respectant la condition selon laquelle $f_{c2}$-$f_{c1}$ = $f_{RF\_u} \pm f_{IF}$; où $f_{IF}$ est une fréquence intermédiaire, $f_{RF\_u}$, est la fréquence porteuse radiofréquence du signal radiofréquence montant, et $f_{c1}$ est la fréquence porteuse d'une porteuse optique montante des deux porteuses optiques montantes réservées à une ONU ;
ou l'exécution de la détection optique hétérodyne comprend :

le fait de générer un signal optique d'oscillateur local, et l'exécution de la détection optique hétérodyne sur le signal optique montant d'une ONU en utilisant le signal d'oscillateur local généré, au moyen de l'OLT.

**Figure 1**

**Figure 2**

**Figure 3**

**Figure 4**

**Figure 5**

**Figure 6**

**EP 2 180 614 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1635489 A